# EUROPEAN PATENT APPLICATION

(11) **EP 2 629 469 A2**
(43) Date of publication of application: **21.08.2013**
(21) Application number: 13153336.6
(22) Date of filing: 30.01.2013
(51) Int. Cl.: H04L 12/701

(54) **Wireless gateway apparatus**

(30) Priority: 14.02.2012 JP 2012029133
(71) Applicant: Yokogawa Electric Corporation, Tokyo 180-8750 (JP)
(72) Inventor: Sawada, Keisuke, Tokyo (JP); Hongo, Takeshi, Tokyo (JP)
(74) Representative: Henkel, Breuer & Partner

(57) **Abstract**

A redundant communication system may include: a plurality of multiple communication apparatuses configured to function as a gateway, the same network address being allocated to all of the plurality of multiple communication apparatuses on a network; a setting unit configured to set one of the plurality of multiple communication apparatuses to be an active system as a first communication apparatus, the setting unit being configured to set the other of the plurality of multiple communication apparatuses to be a standby system as a second communication apparatus; and a switch configured to open to the network only the first communication apparatus.

## Description

### BACKGROUND OF THE INVENTION

### Field of the Invention

The present invention relates to a redundant communication system and a redundant communication method in which multiply provided communication devices functioning as a gateway.

Priority is claimed on Japanese Patent Application No. 2012-029133, filed February 14, 2012, the content of which is incorporated herein by reference.

### Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

When connecting, for example, controllers from different manufacturers and having different communication standards in a field system, a communication device that has a gateway function is used. To improve the reliability of the field system, redundant configuration of equipment such as controllers, communication circuits, and the like that are components in the system is used, and there are cases in which communication devices are also configured redundantly.

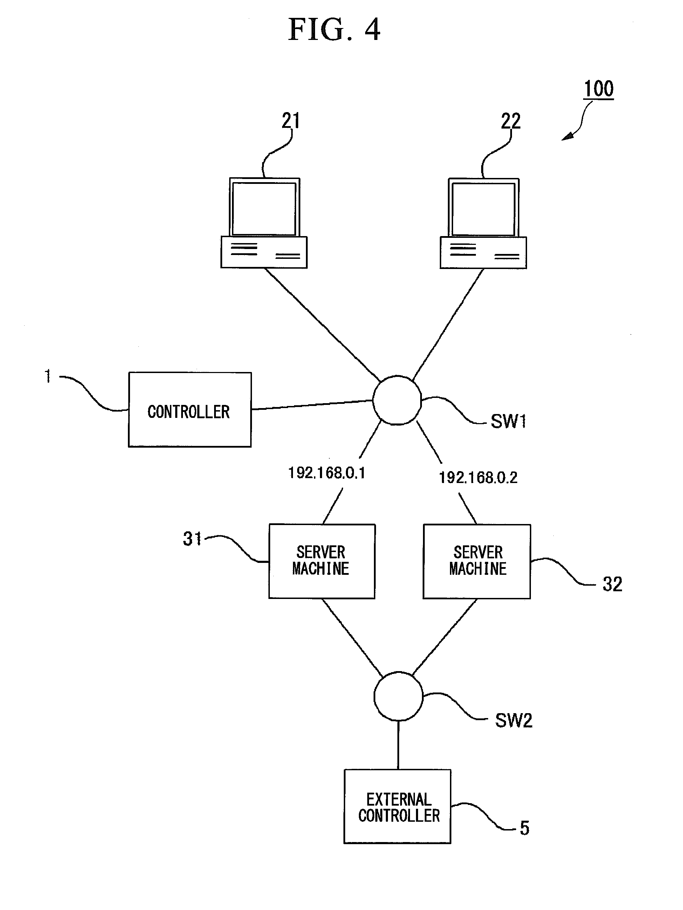

FIG. 4 is a block diagram showing an example of the constitution of a double server machine having a gateway function in accordance with the related art.

As shown in FIG. 4, a distributed field control system 100 includes a controller 1 that controls a field device group, operating and monitoring apparatuses 21 and 22 for performing operation and monitoring of the field device group via the controller 1, server machines 31 and 32 that have a gateway function, a network switch SW1 and a network switch SW2. The controller 1, the operating and monitoring apparatuses 21 and 22 and the server machines 31 and 32 are connected via a control network that uses the network switch SW1. The control network is configured using, for example, an Ethernet (registered trademark).

As shown in FIG. 4, an external controller 5 that is a PLC (programmable logic controller) or the like is connected to the field control system 100 via the server machines 31 and 32 and the network switch SW2.

Different IP addresses (such as 192.168.01 and 192.168.02) on the control network are allocated to the server machine 31 and the server machine 32, which operate as mutually separate gateways and also provide the functions of completely independent servers.

If a connection is required to the external controller 5, the client function of the controller 1 or the operating and monitoring apparatuses 21 and 22 distinguishes the server machine 31 or the server machine 32 that is operating as the active gateway, and makes a connection to the external controller 5 via that server machine. In this manner, because of the dual server machines, even if a fault occurs in one of the server machines, it is possible to make connection to the external controller 5 via the other server machine.

With the above-noted constitution, however, because all of the clients of devices that connect to the external controller 5 need to have logic for the purpose of distinguishing the active system and the standby system among the server machines 31 and 32, the cost is high, because of the development of new client functionality. Also, the operation at the time of fail-over/switch-over for judging the active system and the standby system for each client is different for each client device, thereby leading to the possibility of problems.

Also, the data of the external controller 5 is held in the server machines 31 and 32 as cache memories, these cache memories being periodically updated. For this reason, with the above-noted constitution, because both of the server machines 31 and 32 access the external controller 5 in parallel, the burden placed on the external controller 5 becomes large.

### SUMMARY

A redundant communication system may include: a plurality of multiple communication apparatuses configured to function as a gateway, the same network address being allocated to all of the plurality of multiple communication apparatuses on a network; a setting unit configured to set one of the plurality of multiple communication apparatuses to be an active system as a first communication apparatus, the setting unit being configured to set the other of the plurality of multiple communication apparatuses to be a standby system as a second communication apparatus; and a switch configured to open to the network only the first communication apparatus.

The network may be a control network in a field control system that controls field devices.

The setting unit may be included in the second communication apparatus.

The switch may be included in the second communication apparatus.

The first communication apparatus may be configured to provide a functionality to a client device that access an external controller, and perform data collection and setting with respect to the external controller in response to a request from the client device.

The first and second communication apparatuses may be configured to execute mutual heartbeat transmission and reception with each other so that the first and second communication apparatuses perform mutual verification that a gateway function is operating normally.

The second communication apparatus may be configured to detect that a problem occurs in the first communication apparatus by detecting a generation of a time-out in a reception of a heartbeat.

When detecting a problem in the first communication apparatus, the second communication apparatus may be configured to elevate to active status, and send an instruction to the switch so that a port of the switch connected to the second communication apparatus is opened, and a port of the switch connected to the first communication apparatus is closed.

A redundant communication method using a plurality of multiple communication apparatuses that functions as a gateway, the same network address being allocated to all of the plurality of multiple communication apparatuses on a network, may include: setting one of the plurality of multiple communication apparatuses to be an active system as a first communication apparatus, and setting the other of the plurality of multiple communication apparatuses to be a standby system as a second communication apparatus; and controlling a switch that opens to the network only the first communication apparatus.

The network may be a control network in a field control system that controls field devices.

The redundant communication method may further include: by the first communication apparatus, providing a functionality to a client device that access an external controller, and performing data collection and setting with respect to the external controller in response to a request from the client device.

The redundant communication method may further include: by the first and second communication apparatuses, executing mutual heartbeat transmission and reception with each other so that the first and second communication apparatuses perform mutual verification that a gateway function is operating normally.

The redundant communication method may further include: by the second communication apparatus, detecting that a problem occurs in the first communication apparatus by detecting a generation of a time-out in a reception of a heartbeat.

The redundant communication method may further include: when detecting a problem in the first communication apparatus, by the second communication apparatus, making the second communication apparatus elevated to active status, and sending an instruction to the switch so that a port of the switch connected to the second communication apparatus is opened, and a port of the switch connected to the first communication apparatus is closed.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram showing the constitution of the redundant communication system in accordance with the first preferred embodiment of the present invention;
FIG. 2 is a flow chart illustrating an operation of the redundant communication system in accordance with the first preferred embodiment of the present invention;
FIG. 3 is a flow chart illustrating an operation of the redundant communication system in the case in which a problem occurs in the active server machine 31 in accordance with the first preferred embodiment of the present invention; and
FIG. 4 is a block diagram showing an example of the constitution of a double server machine having a gateway function in accordance with the related art.

### DETAILED DESCRIPTION OF THE PREFERRED EMBODIMENTS

The present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

A redundant communication system in accordance with the first preferred embodiment of the present invention will be described below.

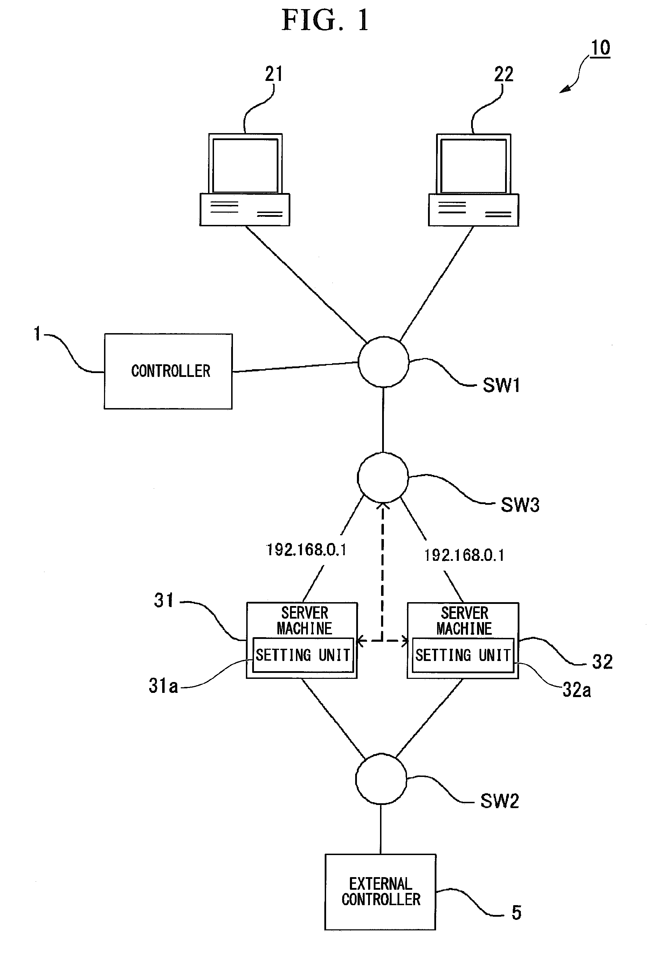

FIG. 1 is a block diagram showing the constitution of the redundant communication system in accordance with the first preferred embodiment of the present invention.

As shown in FIG. 1, a distributed field control system 10 includes a controller 1 that controls a field device group, operating and monitoring apparatuses 21 and 22 that operate and monitor the field device group via the controller 1,server machines 31 and 32 that have a gateway function, and the network switches SW1, SW2 and SW3. The controller 1, the operating and monitoring apparatuses 21 and 22, and the server machines 31 and 32 are connected to a control network using the network switch SW1 and the network switch SW3. The control network is configured using, for example, an Ethernet (registered trademark).

An external controller 5 that is a PLC (programmable logic controller) or the like is connected to the field control system 10 via the server machines 31 and 32 and the network switch SW2.

In the redundant communication system in accordance with the preferred embodiment of the present invention, the server machine 31 and the server machine 32 are assigned the same IP address (for example, 192.168.01) on the control network.

The network switch SW3 opens to the control network only the server machine of the server machines 31 and 32 that is the active system, the port at which the active server machine is connected being open and the port at which the standby server machine is connected being closed.

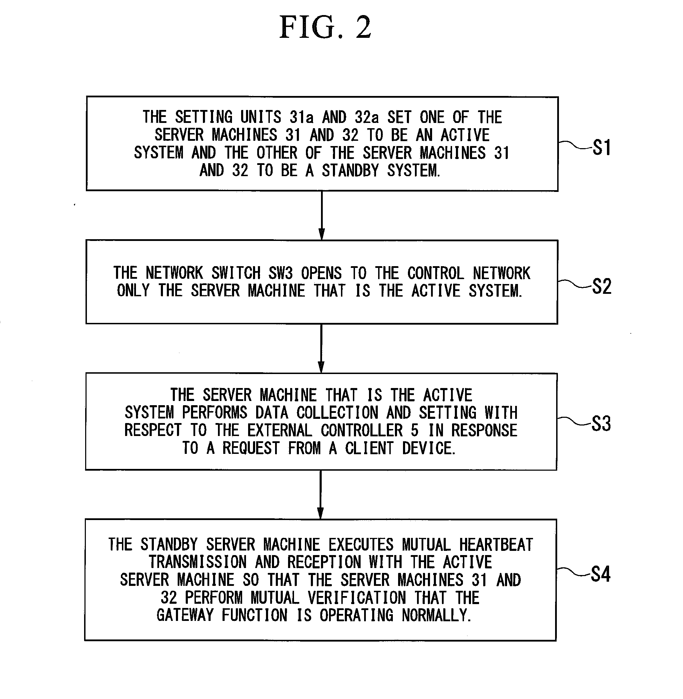

Next, an operation of the redundant communication system of in accordance with the first preferred embodiment of the present invention will be described. FIG. 2 is a flow chart illustrating an operation of the redundant communication system in accordance with the first preferred embodiment of the present invention.

The server machines 31 and 32 may be referred to as a communication apparatuses. In the redundant communication system in accordance with the first preferred embodiment of the present embodiment, one of the server machine 31 and the server machine 32 functions as the active system, and the other is the standby system. Specifically, the server machine 31 includes a setting unit 31a, and the server machine 32 includes a setting unit 32a. The setting units 31a and 32a set one of the server machines 31 and 32 to be an active system and the other of the server machines 31 and 32 to be a standby system (step S1). Only the setting unit in the server machine that is the standby system may perform this setting.

In the normal condition, the network switch SW3 opens to the control network only the server machine that is the active system (step S2). The server machine that is the active system provides the functionality to client devices such as the controller 1 and operating and monitoring apparatuses 21 and 22 that access the external controller 5, and, in response to a request from a client device, performs data collection and setting with respect to the external controller 5 (step S3).

The standby server machine executes mutual heartbeat transmission and reception with the active server machine. Thereby, the server machines 31 and 32 perform mutual verification that the gateway function is operating normally (step S4). The standby server machine does not perform collection and setting of data with respect to the external controller 5.

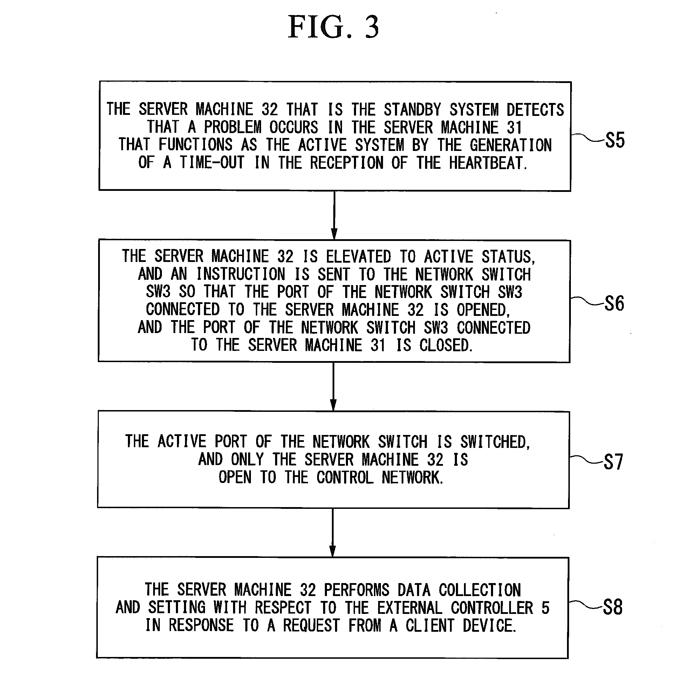

Next, an operation in the case in which a problem occurs in the active server machine 31 will be described. FIG 3 is a flow chart illustrating an operation of the redundant communication system in the case in which a problem occurs in the active server machine 31 in accordance with the first preferred embodiment of the present invention.

If a problem occurs in the server machine 31 that functions as the active system, the server machine 32 that is the standby system detects this by the generation of a time-out in the reception of the heartbeat (step S5).

Upon detecting a problem in the server machine 31, the server machine 32 is elevated to active status, and an instruction is sent to the network switch SW3 so that the port of the network switch SW3 connected to the server machine 32 is opened, and the port of the network switch SW3 connected to the server machine 31 is closed (step S6). In accordance with this instruction, the active port of the network switch is switched, and only the server machine 32 is open to the control network (step S7).

Thereafter, in response to a request from a client device such as the controller 1 or the operating and monitoring apparatuses 21 and 22 or the like, the server machine 32 performs data collection and setting with respect to the external controller 5 (step S8). Because the IP address remains unchanged even if the server machine that is the active system is switched, it is not necessary for client devices on the control network to recognize the switching of the active system.

As described above, in the redundant communication system in accordance with the first preferred embodiment of the present invention, by allocating the same IP address to the server machines 31 and 32, and by switching the connection by the network switch SW3, not only is it not necessary for devices such as the controller 1, the operating and monitoring apparatuses 21 and 22 and the like on the network to distinguish between the active system and the standby system, the same operation is possible as if there were only one gateway. It is therefore not necessary to modify control to accommodate dual gateways and, when dual gateways are used, it is not necessary to perform engineering tasks with respect to existing client devices which are connected to the control network. Additionally, even if a new client device is added, no more engineering is required than would be required in the case of a single gateway. Even if the switching between the active and the standby of the server machines 31 and 32 is done manually, nothing need be done to the client devices to complete the switching at the server machines 31 and 32, and the burden of maintenance and management such as program updating, modification, and the like is lightened.

Also, the server machines 31 and 32 themselves recognized their own status as being either active and standby, and only the active server machine performs collection and setting of data with respect to the external controller 5. For this reason, it is possible to reduce the burden on the external controller 5 to a level that is equivalent to the case of having a single gateway.

In addition to dual gateways, the server functionality of the server machines 31 and 32 can be made dual by the same method.

Although the above-noted embodiment shows the example of a dual gateway, even if there are three or more gateways, there is no influence had on the control network or the client devices. Also, if multiple control networks are used, it is sufficient to provide a number of network switches corresponding to the number of control network systems, with the switches assigned to each of the systems.

As described above, according to the redundant communication system in accordance with the preferred embodiment of the present invention, in addition to opening to the network, by switch control, only the communication apparatus that is made the active system, the same address is allocated to all of the multiply provided communication apparatuses, thereby enabling a reduction of the burden of engineering tasks with respect to the network side.

The present invention is not restricted to the above-noted embodiment, and can be widely applied to redundant communication systems in which there are multiply provided communication apparatuses functioning as gateways.

The present invention provides a redundant communication system or the like that lowers the burden of engineering tasks.

According to a redundant communication system in accordance with the preferred embodiment of the present invention, by having a switch that opens to the network only a communication device that is set to be the active system and allocating the same address to all multiply provided communication devices, it is possible to reduce the burden of the engineering tasks with respect to the network side.

According to the redundant communication method in accordance with the preferred embodiment of the present invention, by using a switch that opens to the network only the communication device that is set as the active side, and by allocating the same address to all multiply provided communication devices, it is possible to reduce the burden of engineering tasks with respect to the network side.

As used herein, the following directional terms "forward, rearward, above, downward, right, left, vertical, horizontal, below, transverse, row and column" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A redundant communication system comprising:
a plurality of multiple communication apparatuses configured to function as a gateway, the same network address being allocated to all of the plurality of multiple communication apparatuses on a network;
a setting unit configured to set one of the plurality of multiple communication apparatuses to be an active system as a first communication apparatus, the setting unit being configured to set the other of the plurality of multiple communication apparatuses to be a standby system as a second communication apparatus; and
a switch configured to open to the network only the first communication apparatus.

2. The redundant communication system according to claim 1, wherein the network is a control network in a field control system that controls field devices.

3. The redundant communication system according to claim 1, wherein the setting unit is included in the second communication apparatus.

4. The redundant communication system according to claim 1, wherein the switch is included in the second communication apparatus.

5. The redundant communication system according to claim 1, wherein the first communication apparatus is configured to provide a functionality to a client device that access an external controller, and perform data collection and setting with respect to the external controller in response to a request from the client device.

6. The redundant communication system according to claim 1, wherein the first and second communication apparatuses are configured to execute mutual heartbeat transmission and reception with each other so that the first and second communication apparatuses perform mutual verification that a gateway function is operating normally.

7. The redundant communication system according to claim 1, wherein the second communication apparatus is configured to detect that a problem occurs in the first communication apparatus by detecting a generation of a time-out in a reception of a heartbeat.

8. The redundant communication system according to claim 1, wherein,
when detecting a problem in the first communication apparatus, the second communication apparatus is configured to elevate to active status, and send an instruction to the switch so that a port of the switch connected to the second communication apparatus is opened, and a port of the switch connected to the first communication apparatus is closed.

9. A redundant communication method using a plurality of multiple communication apparatuses that functions as a gateway, the same network address being allocated to all of the plurality of multiple communication apparatuses on a network, the redundant communication method comprising:
setting one of the plurality of multiple communication apparatuses to be an active system as a first communication apparatus, and setting the other of the plurality of multiple communication apparatuses to be a standby system as a second communication apparatus; and
controlling a switch that opens to the network only the first communication apparatus.

10. The redundant communication method according to claim 9, wherein the network is a control network in a field control system that controls field devices.

11. The redundant communication method according to claim 9, further comprising:
by the first communication apparatus, providing a functionality to a client device that access an external controller, and performing data collection and setting with respect to the external controller in response to a request from the client device.

12. The redundant communication method according to claim 9, further comprising:
by the first and second communication apparatuses, executing mutual heartbeat transmission and reception with each other so that the first and second communication apparatuses perform mutual verification that a gateway function is operating normally.

13. The redundant communication method according to claim 9, further comprising:
by the second communication apparatus, detecting that a problem occurs in the first communication apparatus by detecting a generation of a time-out in a reception of a heartbeat.

14. The redundant communication method according to claim 9, further comprising:
when detecting a problem in the first communication apparatus, by the second communication apparatus, making the second communication apparatus elevated to active status, and sending an instruction to the switch so that a port of the switch connected to the second communication apparatus is opened, and a port of the switch connected to the first communication apparatus is closed.
